# EUROPEAN PATENT APPLICATION

(11) **EP 1 841 121 A1**
(43) Date of publication of application: **03.10.2007**
(21) Application number: 07250443.4
(22) Date of filing: 02.02.2007
(51) Int. Cl.: H04L 9/08

(54) **Verifiable generation of weak symmetric keys for strong algorithms**

(30) Priority: 31.03.2006 US 395877
(71) Applicant: AVAYA TECHNOLOGY LLC, Basking Ridge, NJ 07920 (US)
(72) Inventor: Gilman, Robert R., Broomfield Colorado 80020 (US)
(74) Representative: Williams, David John

(57) **Abstract**

The present invention provides a method, system, and device for producing cryptographic keys. More specifically, the cryptographic keys may be produced such that they have an effective key size and an apparent key size that differs from the effective key size. Generally, the effective key size is not restricted by export regulations and the apparent key size may be restricted by export regulations.

## Description

### FIELD OF THE INVENTION

The invention relates generally to encryption and particularly to producing apparently strong keys that occupy a weak key space.

### BACKGROUND OF THE INVENTION

An exemplary secured Internet communication session connects first and second communication devices, such as IP hardphones, softphones, Personal Computers (PCs), laptops, telephony servers, and Personal Digital Assistants (PDAs), via an untrusted or insecure network (such as the Internet). The communication devices seek to establish a secured session and must perform a key exchange. As will be appreciated, a random number generator usually located at a PBX server that connects the two endpoints is used to produce the keys that will be employed by each communication device during the secured session. The keys are used by each of the first and second communication devices to encrypt and decrypt and authenticate plain and cipher text. In symmetrical encryption, encryption and decryption are performed by inputting identical keys into the same encryption algorithm at each of the session nodes.

Many countries, such as the U.S., place strict export controls on cryptography technology and products for reasons of national security. In the U.S., export controls on commercial encryption products are administered by the Bureau of Industry and Security in the U.S. Department of Commerce, as authorized by the Export Administration Regulations or EAR, and by the Office of Defense Trade Controls (DTC) in the State Department, as authorized by the Information Technology Administration Regulations or ITAR. Historically, strict controls have been placed on granting export licenses for encryption products stronger than a certain level. Other countries have similar regulations.

An ongoing challenge for companies selling cryptographically enabled products internationally is controlling the strength of the encryption product effectively. For such products sold in the U.S., encryption strength is much more loosely controlled than for such products sold in other countries, particularly certain strictly export controlled countries, such as Iran, Cuba, and North Korea.

One approach to controlling encryption strength is to vary the encryption algorithm based upon product destination. This is done using a license file. By way of illustration, a license file utility controls whether or not the device supports first or second encryption algorithms of differing strengths. Examples of weaker encryption algorithms include the Data Encryption Standard-56 (DES) and of stronger encryption algorithms include Triple or Three DES and Advanced Encryption Standard or AES. As will be appreciated, DES is much weaker than Triple DES. A flag is set or unset in the license file when the device is not to support the stronger encryption algorithm. During a license check and/or session negotiation, the license utility will deactivate the stronger encryption algorithm and activate the weaker encryption algorithm when the flag indicates that the device is not to support the stronger encryption algorithm and activate the stronger encryption algorithm , thus overriding the weaker encryption algorithm when the flag indicates that the device is to support the stronger encryption algorithm.

In another approach that has been implemented by web browser and server vendors (e.g., Netscape^{™}, Microsoft^{™}, etc.), an application is not allowed to negotiate strong keys of long key lengths and associated cipher suites (encryption algorithms), unless the web server, web browser, and web browser certificate are of a version, type, and strength to allow for strong cipher suites and key sizes to be used. Otherwise, weak keys of short key lengths and associated cipher suites are used.

Problems with these approaches include the transparency, to a sophisticated observer, of the activation of the weaker encryption algorithm. Based on this knowledge, sophisticated users may attempt to alter the license file to activate the stronger encryption algorithm. This transparency is particularly a problem where the user can view freely the protocol exchange and determine if the software version is such that encryption is restricted.

Another problem is that if weak keys are generated then directly distributed to the communication devices, a potential attacker may be able to more easily determine the key size. Since substantial computing resources may be required to break certain encryption algorithms, attackers do not usually try to decrypt every message that is encrypted. Rather, they will choose messages that they know have been encrypted with smaller keys. This makes messages sent with the given smaller key more susceptible to interception and unauthorized decryption. On the other hand, attackers may not attempt to decrypt a message that they believe has been encrypted with a larger 128-bit key, since they do not wish to commit computing resources to such a task that they believe may be impossible. Currently, it is relatively easy for attackers to determine the size of key used to encrypt a particular message.

### SUMMARY OF THE INVENTION

These and other needs are addressed by the various embodiments and configurations of the present invention. The present invention is directed generally to the variation of key size appearance, to produce a verifiable weak key having a strong key form, particularly for products to be exported. At least some embodiments of the present invention are typically applicable in encryption protocols in which a third party generates keys for other participants (*i.e.* principals). Examples of devices that may employ these protocols include, but are not limited to, an H.323 gatekeeper or a Kerberos server. In some cases (e.g., SRTP) the transmitter may generate the key and send it to the receiver. This last step generally requires a secure communication channel, of course.

In accordance with one embodiment of the present invention, a method is provided for producing a cryptographic key. The method comprises:
(a) generating a first key having a first apparent size and a first effective size;
(b) determining a fixed key;
(c) choosing a fixed cryptographic algorithm;
(d) using the fixed key and the chosen algorithm to project the first key onto a second key space to create a second key, wherein the second key has a second apparent size and substantially the first effective size, and wherein the second apparent size is different from the first apparent size;
(e) distributing the projected second key to at least one recipient.

In another embodiment, steps b and d are combined into a one-way cryptographic function, such as a keyed hash function, which both expands and scrambles the first key in the same process to form the second key.

In effect, a first key is generated within a confined key space, and is then "projected" onto some subspace of a larger key space, to form a second key, by applying a keyed cryptographic function to the first key, using a fixed key known only to the generator. When the fixed key used for the projection is unknown to an attacker, that attacker cannot identify the resulting subspace, and thus cannot limit his/her search for the second key to a small subspace. However, a third party that is privy to the fixed key can easily search the second key subspace by generating each possible first key and applying the projection.

The effective size of the first key is typically defined by the number of bits used to generate that key. For example, if the first key was generated to be a 64-bit key, the effective size of the first key would be 64-bits and the corresponding "key strength" of the first key would be 2⁶⁴. Typically, the first apparent size matches the first effective size.

The expansion and scrambling of the first key to create the second key results in a second key that has substantially the same effective size as the first key, but a different apparent size. In other words, continuing the example from above, the second key substantially still has an effective size of 64-bits and the corresponding substantial "key strength" of 2⁶⁴. The key strength of the second key is substantially equal to the original key strength. However, as can be appreciated by one of skill in the art, the key strength of the second key is substantially equal to the key strength of the first key. Likewise, the "effective key size" of the second key is substantially equal to the "effective key size" of the first key.

Due to the expansion of the first key, the second key has a larger apparent size. The second apparent size may be anywhere from 65-bits up to hundreds, thousands, or even millions of bits. It is generally advantageous to expand the first key to produce a second key that resembles a larger key that is used in common encryption algorithms. For instance, the second apparent size of the second key may be 128-bits. This may appear to be a 128-bit key having an effective key strength of 2¹²⁸, although it only has an effective key size of 64-bits and the effective key strength of 2⁶⁴. However, the appearance of the second key may make a third party, without knowledge of the fixed key, believe that the second key is too large break and a potential attacker may be dissuaded from tampering with the key or any messages encrypted with the key.

The "scrambling" of the expanded key may be achieved by employing a symmetric encryption algorithm that utilizes the fixed key. or, alternatively, the scrambling and expansion may be done by using a public-key encryption system, a one-way cryptographic keyed hash or pseudo-random function, such as is used in some protocols (e.g., MIKEY, SRTP) for session key derivation from a shared session master key. In the event that a symmetric algorithm is used, an authorized third party with knowledge of the fixed key can easily reverse the projection of a projected key with the fixed key to verify the size of the generated key, and can also determine the key space occupied by any key generated. Alternatively, in the event that an asymmetric algorithm or a one-way hash-based function is employed, an authorized third party with knowledge of the fixed key can use the fixed key to determine the key space occupied by any generated key. Thereafter, the authorized third party can search the actual key space occupied by the generated key rather than having to search the larger key space that the second key appears to occupy. This scrambling/encryption process is used to preserve the security of the original keys and, typically, should be stronger than the keys it protects. Thus an attacker who knows the expansion/scrambling scheme and obtains a key generated thereby, but does not know the fixed key, will not be able to easily determine the fixed key. Furthermore, such an attacker, not knowing the fixed key, cannot easily determine the actual key space occupied by the second (projected) keys produced by the generator.

To conform to U.S. export laws, many times sample keys will need to be generated and sent to an authorized third party like the National Security Agency (NSA) or Department of Commerce. There, the generated key is analyzed to determine if the key was generated in compliance with key generation regulations. Since the second key has a second apparent size that may potentially be greater than regulations permit, the authorized third party may need to reverse, or test, the formation of the projected key (after removing any encryption used for secure transmission.) If the fixed key is shared with the authorized third party, that party may be able to discern easily that, though the second key has a second apparent size that may be greater than the allowable key generation size, the effective size of the second key is within allowable limits. Therefore, the authorized third party (*e.g*., the NSA) is able to quickly confirm that the first key was generated within allowable limits of export regulations.

These and other advantages will be apparent from the disclosure of the invention(s) contained herein. The above-described embodiments and configurations are neither complete nor exhaustive. As will be appreciated, other embodiments of the invention are possible utilizing, alone or in combination, one or more of the features set forth above or described in detail below.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

### BRIEF DESCRIPTION OF THE DRAWINGS

Fig. 1 is a block diagram of a communication network according to at least some embodiments of the present invention;
Fig. 2 is a block diagram of central key distributor, like a switch or server, according to at least some embodiments of the present invention;
Fig. 3 is a block diagram of communication devices utilizing encryption keys according to at least some embodiments of the present invention;
Fig. 4 is a block diagram of an endpoint utilized by an authorized third party according to at least some embodiments of the present invention;
Fig. 5 is a flowchart depicting a method of generating keys according to at least some embodiments of the present invention; and
Fig. 6 is a flowchart depicting a method of verifying key strength according to at least some embodiments of the present invention.

### DETAILED DESCRIPTION

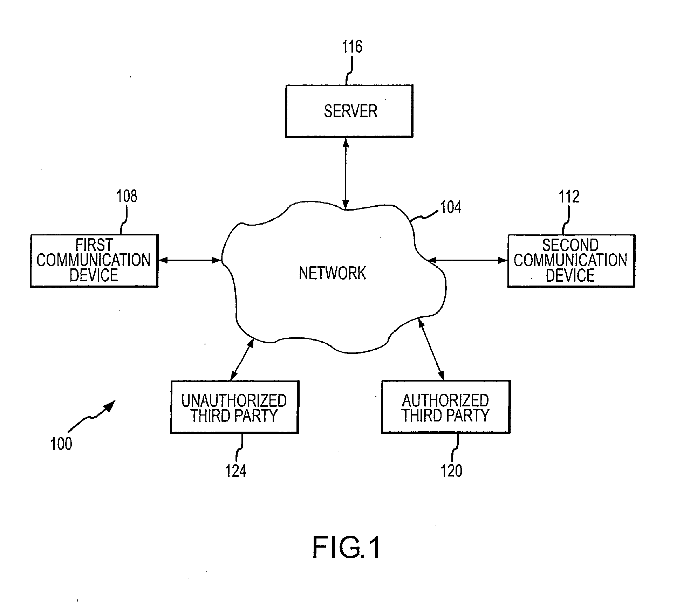

Referring initially to Fig. 1 an exemplary communication system 100 will be described in accordance with at least some embodiments of the present invention. The communication system 100 comprises a network 104 connecting a first communication device 108, a second communication device 112, a switch/server 116, an authorized third party 120, and an unauthorized third party 124. The communication devices 108 and 112 can be any of a number of packet-switched devices including, without limitation, Personal Computer (PC), laptop, Personal Digital Assistant (PDA), IP hardphone, IP softphone, wireless phone, cellular phone, instant messaging software, and networking equipment.

The network 104 may be any type of suitable communications network that is operable to transmit data from a first endpoint to a second endpoint, where typical endpoints include the communication devices 108 and 112, the switch/server 116, the authorized third party 120, and the unauthorized third party 124. Examples of suitable types of networks 104 include, but are not limited to, a Local Area Network (LAN), a Wide Area Network (WAN) like the Internet, and any other type packet-switched network known in the art.

The server 116 may be a part of an enterprise or service-provider network. The term "server" as used herein should be understood to include a PBX, an ACD, an enterprise server, an IVR server, or other type of communications system server, as well as other types of processor-based communication control devices such as media servers, computers, adjuncts, *etc.*

The authorized third party 120 is typically a third party that is interested in analyzing keys generated by the server 116 to verify the strength of the keys generated. Devices used by the authorized third parties 120 to analyze the generated keys may be in the form of a server, super-computer, network of processors, a device emulating an endpoint, or other type of processing mechanism. Authorized third parties 120 are typically given information that allows them to analyze the strength of the generated keys. Information that is typically shared with an authorized third party 120 may include keys that were used to expand and/or scramble the generated key prior to distribution.

On the other hand, an unauthorized third party 124 is typically referred to as an attacker, a hacker, or any other untrusted party that is not intended to have information related to a secured communication session. Most types of unauthorized third parties 124 usually try to intercept encrypted messages, keys, and other sensitive data to exploit it for various reasons.

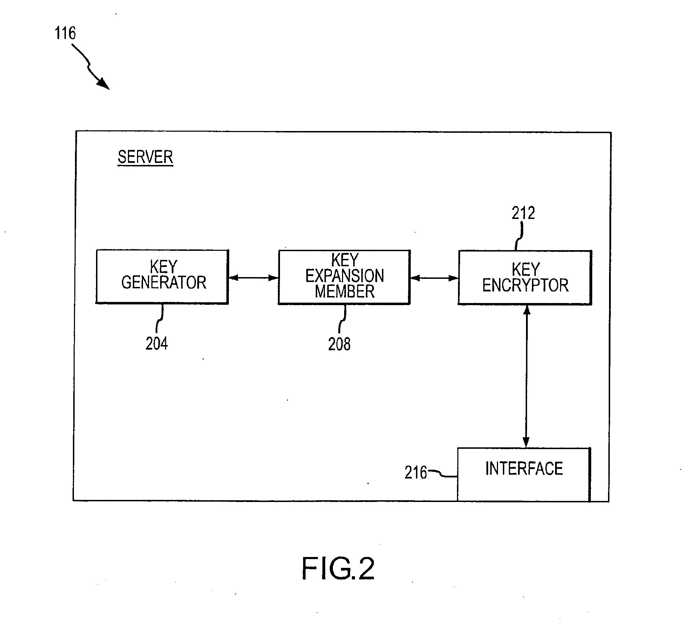

Referring now to Fig. 2 an exemplary server 116 will be described in accordance with at least some embodiments of the present invention. The server 116 typically comprises a key generator 204, a key expansion member 208, a key encryptor/scrambler 212, and an interface 216 for sending/receiving data to/from the network 104. Usually, encryption keys are required by communication devices 108 and 112 when a secured communication session is initiated between the two endpoints. Upon a request for an encryption key, the server 116 enables the key generator 204 to generate a key for use between the first and second communication devices 108 and 112 during the secured session. The key generator 204 may be a random number generator or any other type of mechanism that can be employed to generate keys of various strengths.

As will be appreciated, "key strength" or "effective key size" refers to a number of possible combinations or keys. Key strength is commonly a function of key length. For example, the key strength for a random 16-bit key is 2¹⁶, a 32-bit key is 2³², a 64-bit key is 2⁶⁴ and a 128-bit key is 2¹²⁸. By using a first key having a weaker key strength, the effective cryptographic strength of encryption using the first key is less than that using a second key having a higher effective key strength. The stronger key may be used, for example, in non-export-restricted products, and the weaker key may be used in export-restricted products.

In accordance with at least one embodiment of the present invention, the key generator 204 generates a first key (K_{G}) that has an effective key strength that is in accordance with export regulations. In other words, in order to comply with U.S. export regulations, K_{G} may be generated to have a key length of 64-bits. Thus, the effective key size of K_{G} would be 64. Of course, the key generator 204, depending upon the appropriate regulations and/or other desired operating parameters, may generate larger or smaller keys. For example a 56-bit key or a 72-bit key may be generated then expanded to any size depending upon the desired encryption algorithm.

The generated key having the first effective key strength is then sent to the key expansion member 208. The key expansion member 208 changes the apparent size of K_{G} without changing the effective key strength. The key expansion member 208 may expand the apparent size of K_{G} in a number of different ways. For example, a second key (K_{E}) that is the expansion of K_{G} may be formed as the concatenation of K_{G} with 64-bits of zero, ones, or some other fixed, predictable binary pattern (e.g., a defined ordering of ones and zeros). The concatenation of K_{G} with 64-bits of zero effectively creates a new key with an apparent key size of 128-bits but with an effective key size of the original 64-bits. As can be appreciated by one of skill in the art, zeros may be appended onto the beginning of K_{G} or may be placed within K_{G} at different points. However, in order to make verification of the effective key size of K_{E} easier, it may be advantageous to keep the zeros together either on the end or the beginning of K_{G}. Additionally, as can be further appreciated by one of skill in the art, ones may be used alone or in combination with other zeros to perform the function of the additional zeros. The apparent key size may be expanded to any size, depending upon the type of encryption algorithm that is to be used by the communication devices 108 and 112. Typically, because of U.S. export restrictions, a 64-bit key is generated at the key generator 204 and is expanded to the apparent key size of 128-bits because known encryption algorithms like the AES-128 and other 128-bit encryption algorithms are widely used. A 64-bit key or even a 128-bit key may be expanded to have an apparent key size of 256-bits or even larger, again depending upon the type of encryption algorithm that is desired.

The expanded key K_{E} is then sent to the key encryptor 212, where it is encrypted or otherwise scrambled by a cryptographic algorithm using a system-wide fixed key, to have the appearance of a strong key. The key encryptor 212 may use any sort of suitable cryptographic algorithm using a fixed key (F). The fixed key may be a strong key used by, for example an AES-128 encryption algorithm. In one typical application, the encryption algorithm will use the fixed key F to encrypt the expanded key K_{E} to form the projected key K_{S} to be distributed to the parties which will use it. The key, K_{S}, should be distributed securely so that it is not disclosed to any third party.

Any encryption algorithm, whether using symmetric or asymmetric keys, or any cryptographic hash function, can be used. Examples of suitable symmetric encryption algorithms include, but are not limited to, AES (Federal Information Processing Standard 197), triple DES, RC4, Lucifer, Madryga, NewDES, FEAL, REDOC, LOKI, Khufu and Khafre, RC2, IDEA, MMB, CA-1.1, Skipjack, GOST, CAST, Blowfish, SAFER, 3-Way, Crab, SXAL8/MBAL, RC5, knapsack algorithms, Pohlig-Hellman, Rabin, McEliece, Elliptic Curve Cryptosystems, LUC, finite automation public-key cryptosystems, Ong-Schnorr-Shamir, ESIGN, cellular automata, and the like. Examples of suitable asymmetric encryption algorithms include, but are not limited to, Rivest Shamir and Adelman (RSA), Diffie-Hellman, ElGamal, DSS, and the like. Keyed message authentication functions such as HMAC-SHA1, or keyed Pseudo-Random Functions based on hash functions (e.g., the MIKEY PRF) or encryption algorithms (e.g., the SRTP PRF) may be used with the fixed key, F, to both expand and scramble the weak first key. Note that K_{S} might itself be used by the end parties as the master key of a similar PRF to generate session keys for, e.g., data privacy (encryption) and integrity (message authentication).

The distributed key K_{S} generally has an apparent key size representing a relatively strong key *(e.g.,* a 128-bit key) but it actually has an effective key size *(e.g.,* a 64-bit key) of the smaller generated key K_{G}. Because the projected key K_{S} has the appearance of a strong key it is not easy for a third-party observer to deduce that the effective key size is actually reduced so long as the fixed encryption key F is held secret by the generator.

Once the second key Kₛ has been prepared by the key expansion member 208 and key encryptor 212, the second key K_{S} is sent to the interface 216 for distribution to the endpoints in a secure manner. As can be appreciated, the distribution protocol for K_{S} may employ any of the above noted encryption algorithms or other type of suitable algorithm to secure the key for transmission across an unsecured network. The security afforded should be equivalent to an encryption algorithm utilizing a strong encryption key.

In one embodiment, the key generator 204, key expansion member 208, and key encryptor/scrambler 212 are embodied as software on a processor or controller in the server 116, as hardware (e.g., a logic circuit such as an Application Specific Integrated Circuit or ASIC), or as a combination thereof.

In one embodiment, the key generator 204, key expansion member 208 and key encryptor/scrambler 212 are embodied within one or more of the communication devices 108 and/or 112 which share a predetermined fixed secret key F. A communication device may generate the first key for use in the secured communication session and subsequently share that key with another communication device in a secure manner according to known protocols. Then the secured communication session between the communication devices may be performed using a projected key K_{S} that has an apparent size that is larger than its effective size.

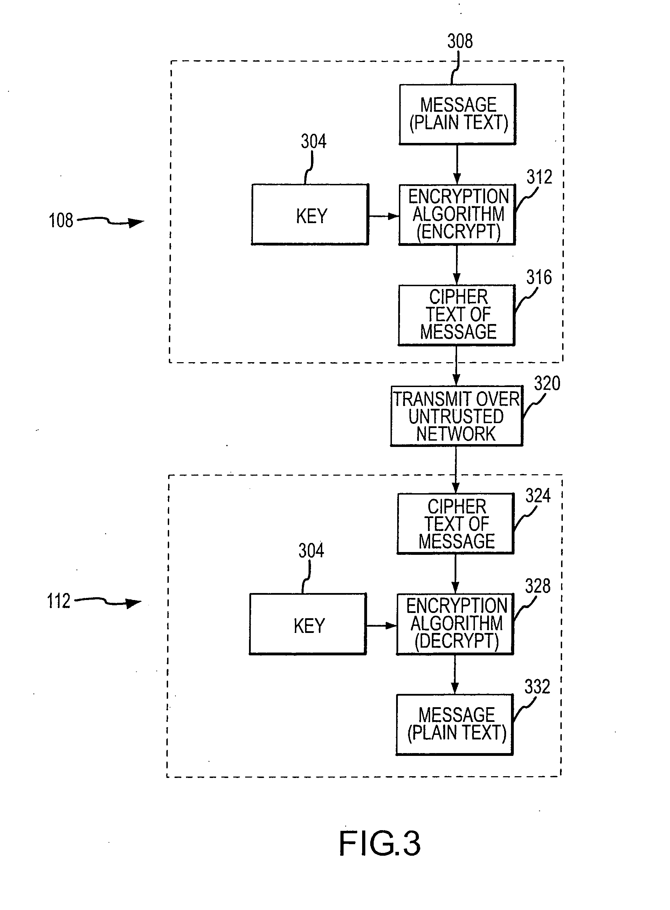

Referring now to Fig. 3, an exemplary communication session between two communication devices 108 and 112 utilizing the projected key will be described in accordance with at least some embodiments of the present invention. The projected key, typically is sent, in a secure manner, to both communication devices 108 and 112 for use in the communication session as key 304. The first communication device 108 generates some type of message in plain text that is then encrypted by the encryption algorithm 312. The encryption algorithm 312 utilizes the encryption key 304 that appears to have a key size that is actually larger than the effective key size or key strength of the key 304. It is recognized that, in some protocols, the key 304 may be used as a "session master key" from which session keys for encryption and authentication may be derived. The cipher text of the message 316 is then generated and transmitted over the network 104, which is usually an untrusted network like the Internet. The second communication device 112 receives the cipher text of the message at the receiving end 324 where it is decrypted by the encryption algorithm 328 utilizing the same key 304 that was used by the first communication device 108 to encrypt the text. The plain text message 332 may then be received and read by the user of the second communication device 112. As noted above, even though the effective key size of the key 304 may not be strong, the appearance of the key 304 makes it seem like a strong encryption key to third parties 120 and 124.

The fixed key F may be distributed to a customer (e.g., an owner of the first and/or second communication device 108 and 112) via the license file, presumably as part of the controls which specify that weak encryption must be used. This could be used to ensure that different customers will not use the same key subspace when conducting secured communications sessions. Thus two separate customers, each knowing the other is restricted to weak keys, cannot easily determine the other's keys because they don't know the fixed key used by the other's system to generate them.

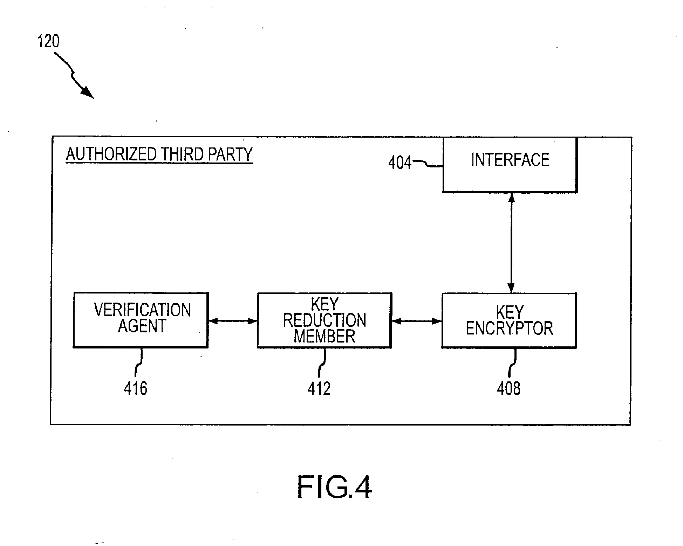

Referring now to Fig. 4, an exemplary authorized third party verification device 120 will be described in accordance with at least some embodiments of the present invention. The authorized third party device 120 comprises an interface 404 for communicating with the network 104, a key decryptor 408, a key reduction member 412, and a verification agent 416. Generally, an authorized third party (like the NSA or Department of Commerce) needs to verify the actual key size of a key generated by systems that have been sold outside of the United States. The authorized third party is typically given the fixed key F that was used to encrypt the expanded K_{E} into the projected key K_{S}. The authorized third party then requests a distributed key and receives a distributed key K_{S} at the interface 404. The distributed key K_{S} is sent to the key decryptor 408 where the fixed key F is used to decrypt the distributed key K_{S}, thus resulting in the expanded key K_{E}. The authorized third party 120 may utilize the same encryption algorithm that was used by the server to encrypt the distributed key K_{S}, in the event that the encryption algorithm used was a symmetric encryption algorithm. Alternatively, in the event that a hash encryption function or some asymmetric encryption function is used, the authorized third party 120 can utilize the fixed key F to determine the actual key space occupied by the generated key K_{G}, therefore making it easier to search the key space of the generated key. Therefore, the authorized third party 120 will not only need the fixed encryption key F, but they will also need to know what encryption algorithm was used in order to decrypt the distributed key K_{S} properly.

At this point the authorized third party will usually be able to determine that the expanded key K_{E} is nothing more than a smaller generated key, for example K_{G}, concatenated with a number of zeros, ones, or a fixed predictable pattern of ones and zeros. However, if the zeros were inserted into the generated key K_{G} such that a simple examination of the expanded key K_{E} cannot show that a smaller key was generated, the key reduction member 412 reduces the apparent key size of K_{E} and the result is the original K_{G} that was generated initially by the key generator 204. Then the key may be sent to the verification agent 416 that can confirm or deny that the effective key size of the generated key K_{G} was smaller than the apparent key size of the distributed key K_{S} and therefore was generated in compliance with applicable regulations.

Exposure of the fixed key F does assist the authorized third party 120 in reducing the distributed, apparently larger, key K_{S} to the base generated key K_{G}, but it does not offer additional aid in finding the keys for other sessions. This helps to build another layer of security around the generated, potentially weak, keys.

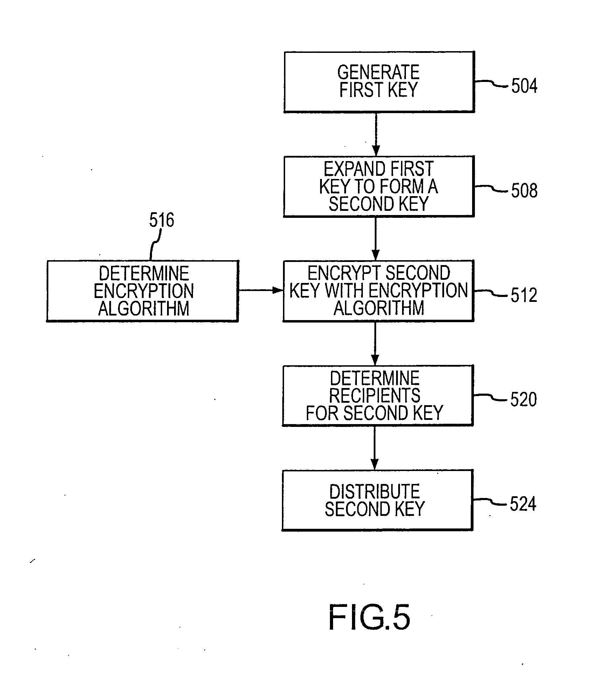

Referring now to Fig. 5 a method of generating a key and distributing that key will be described in accordance with at least some embodiments of the present invention. Initially a first key K_{G} is generated having a first effective key size and matching apparent key size (step 504). Thereafter, the first key is expanded/projected to create a second key K_{E} having the first effective key size and matching apparent key size (step 508). The expanded key K_{E} may be generated in any number of ways: For example, assume that the generated key K_{G} is N-bits long and has the following entries of X₁, X₂, X₃ ... X_{N}, where typically N is greater than or equal to 1. Then K_{E} may be derived in one embodiment by appending up to M-bits of zero (and/or ones) on the end of K_{G}. Now K_{E} would be equal to K_{G} ∥ 0_{N+1}, 0_{N+2}, 0_{N+3} ... 0_{N+M}, where typically M is greater than or equal to 1 and where the apparent key size of K_{E} is N+M and the effective key size of K_{E} is still N.

In an alternative embodiment K_{E} may be derived by appending up to M-bits of zero onto the front of K_{G}. The resulting K_{E} would be 0_{1-M}, 0_{2-M}, 0_{3-M} ... 0_{N-M} ∥K_{G} and the apparent size of K_{E} would still be equal to N+M while the effective key size of K_{E} is N. As noted above, M-bits of one may be used instead of M-bits of zero. By placing the M-bits of zero on either the front or back of K_{G} to form K_{E} the verification of the effective key size of the generated key K_{G} is relatively easy for an authorized third party that wishes to verify the size of the generated key K_{G}.

In still a further alternative embodiment K_{E} may be derived by interspersing the M-bits of zero (or one) between the bits of K_{G}. The resulting K_{E} would be X₁, 0₁, X₂, 0₂, X₃ ... X_{N}. This may make it more difficult for the authorized third party to determine the effective key size of K_{G}, but it may help to add another layer of security to the system utilizing the keys generated and distributed by the server 116.

In step 512, the expanded key K_{E} is encrypted or otherwise projected onto the apparent key space using a keyed cryptographic algorithm that is determined in step 516. The determined cryptographic algorithm includes the use of a determined fixed key F. The fixed key F is used to scramble all expanded keys K_{E} that are generated by the key generator 204 regardless of the session or time when the key is generated. This way, an authorized third party with knowledge of the fixed key F can verify the key space occupied by any key generated by the key generator 204. The encryption algorithm may be a stronger encryption algorithm utilizing a relatively strong encryption key F. The result of the projection of the expanded key K_{E} is a projected key K_{S} that can be distributed while complying with U.S. export laws.

In step 520, the recipients of the projected key K_{S} are determined. After the recipients are determined, the projected key K_{S} is distributed securely to the determined recipients (step 524).- The recipient may then use the distributed K_{S} to conduct a secured transmission of information between themselves and another communication device.

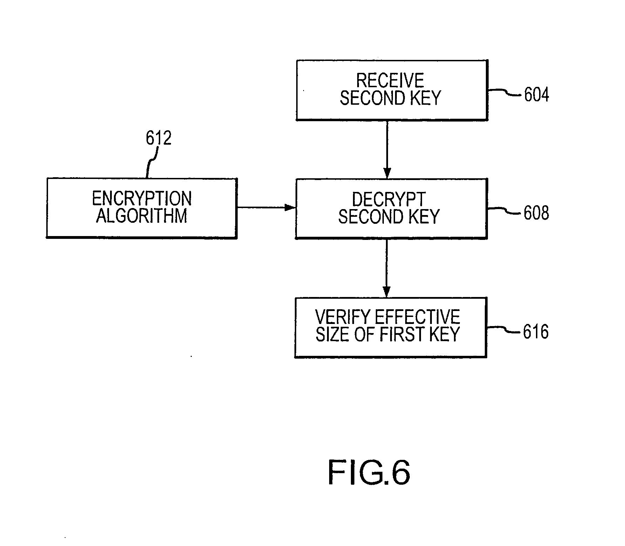

Referring now to Fig. 6, a method of verifying the actual size of a distributed key K_{S} will be described in accordance with at least some embodiments of the present invention. Initially the distributed key K_{S} is received at an authorized third party 120 (step 604). Generally, the key K_{S} is generated and sent securely to the authorized third party 120 like any other key would be distributed to any other customer (e.g., in response to a call set up request with media encryption). This way the authorized third party can determine the key strength of distributed keys sent out in normal operations rather than determining key strength of keys specially generated for the authorized third party.

The authorized third party 120 has typically been given the fixed key F used to create the projected key K_{S}. In step 608, the distributed key K_{S} is decrypted/unscrambled using the projection encryption algorithm and the fixed key F that was supplied to the authorized third party 120 in step 612. Thereafter, the effective key size of the distributed key K_{S} may be determined by the authorized third party 120 (step 616). As noted above, in the event that the distributed key K_{S} was scrambled with a symmetric encryption algorithm, the authorized third party 120 can use the fixed key F to unscramble the key and see the expanded key that includes the generated key and the additional bits that were used to expand the key. In the event that the distributed key K_{S} was scrambled with an asymmetric encryption algorithm, the authorized third party 120 can use the fixed key F to discover the key space occupied by the generated key K_{S}. Then the authorized third party 120 can search the actual key space, rather than searching the larger apparent key space of the distributed key K_{S}. The authorized third party 120 is able to make a determination of the effective size of the distributed key K_{S} while they may not necessarily be given any further information relating to keys generated in other communication sessions.

The present invention, in various embodiments, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, includes providing devices and processes in the absence of items not depicted and/or described herein or in various embodiments hereof, including in the absence of such items as may have been used in previous devices or processes, e.g., for improving performance, achieving ease and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments for the purpose of streamlining the disclosure. This method of disclosure is not to be interpreted as reflecting an intention that the claimed invention requires more features than are expressly recited in each claim. Rather, as the following claims reflect, inventive aspects lie in less than all features of a single foregoing disclosed embodiment. Thus, the following claims are hereby incorporated into this Detailed Description, with each claim standing on its own as a separate preferred embodiment of the invention.

Moreover, though the description of the invention has included description of one or more embodiments and certain variations and modifications, other variations and modifications are within the scope of the invention, e.g., as may be within the skill and knowledge of those in the art, after understanding the present disclosure. It is intended to obtain rights which include alternative embodiments to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A method for producing a cryptographic key, comprising:
generating a first key having a first apparent size and a first effective size;
determining a fixed key;
choosing a fixed cryptographic algorithm;
using the fixed key and the chosen algorithm to project the first key onto a second key space to create a second key, wherein the second key has a second apparent size and substantially the first effective size, and wherein the second apparent size is different from the first apparent size;
distributing the second key to at least one recipient.

2. The method of claim 1, wherein the second apparent size is larger than the first apparent size, wherein the projection of the first key comprises employing at least one of an asymmetric encryption algorithm and a cryptographic hash algorithm that utilizes the fixed key, and wherein the at least one recipient comprises an authorized third party, the method further comprising:
distributing the fixed key to the authorized third party; and
sending the second key to the authorized third party such that the first effective size of the second key can be verified by the authorized third party.

3. The method of claim 1, wherein the second apparent size is larger than the first apparent size, wherein the projection of the first key comprises employing a symmetric encryption algorithm that utilizes the fixed key, and wherein the at least one recipient comprises an authorized third party, the method further comprising:
distributing the fixed key to the authorized third party; and
sending the second key to the authorized third party such that the first effective size of the second key can be verified by the authorized third party.

4. The method of claim 1, wherein the projecting step comprises combining the first key with M-bits of zeros and/or ones, wherein M is greater than or equal to one, and wherein the M-bits of zeros and/or ones are at least one of placed in front of the first key, behind the first key, and distributed within the first key and further comprising:
determining a maximum effective size of a generated key;
receiving the second key;
analyzing the second key to determine the effective size of the second key and the apparent size of the second key; and
determining that the effective size of the second key is not greater than the determined maximum effective size of a generated key.

5. The method of claim 1, wherein the first effective size is not greater than an allowable key generation size according to export regulations, wherein the second apparent size is greater than the allowable key generation size according to export regulations, wherein the first effective size is 64-bits, the first apparent size is 64-bits, and wherein the second apparent size is greater than 64-bits.

6. The method of claim 1, wherein the first key has a first key strength and further comprising:
expanding a third key having a third key strength and third apparent size to create the first key, wherein the first key has a third key strength and a third apparent size, the first key strength being at least the third key strength but less than a key strength based on the first apparent size; and wherein, in the using step, the first key is scrambled using the fixed key to create the second key.

7. A computer readable medium comprising executable instructions operable to perform the method of claim 1.

8. A device for producing a cryptographic key, comprising:
key generating means for producing at least a first key having a first apparent size and a first effective size;
key expansion means for expanding the first key in order to form a second key, wherein the second key has a second apparent size and substantially the first effective size, and wherein the second apparent size is different from the first apparent size; and
key encryptor means for utilizing a fixed key and a cryptographic algorithm to scramble the second key.

9. The device of claim 8, wherein the second apparent size is larger than the first apparent size, wherein the encryption algorithm comprises at least one of an asymmetric encryption algorithm and a hash encryption algorithm, and further comprising an interface operable to transmit the second key to at least one recipient, wherein the at least one recipient comprises an authorized third party, wherein the fixed key is provided to the authorized third party, and wherein the projected second key is sent to the authorized third party via the interface such that the first effective size of the second key can be determined by the authorized third party.

10. The device of claim 8, wherein the second apparent size is larger than the first apparent size, wherein the encryption algorithm comprises a symmetric encryption algorithm, and further comprising an interface operable to transmit the second key to at least one recipient, wherein the at least one recipient comprises an authorized third party, wherein the fixed key is provided to the authorized third party, and wherein the projected second key is sent to the authorized third party via the interface such that the first effective size of the second key can be determined by the authorized third party.

11. The device of claim 8, wherein the key expansion means concatenates the first key with M-bits of zeros and/or ones in order to form the second key, wherein M is greater than or equal to one, wherein the M-bits of zeros and/or ones are at least one of placed in front of the first key, behind the first key, and distributed within the first key, wherein the first effective size is 64-bits, the first apparent size is 64-bits, and wherein the second apparent size is greater than 64-bits.

12. The device of claim 8, wherein the first effective size is not greater than an allowable key generation size according to export regulations, and wherein the second apparent size is greater than the allowable key generation size according to export regulations.
